# EUROPÄISCHE PATENTSCHRIFT

(11) **EP 3 452 321 B1**
(45) Veröffentlichungstag und Bekanntmachung des Hinweises auf die Patenterteilung: **11.11.2020**
(21) Anmeldenummer: 17720097.9
(22) Anmeldetag: 26.04.2017
(51) Int. Cl.: B60J 7/19, B60J 7/047

(54) **ANORDNUNG MIT ZWEI DECKELN FÜR EIN FAHRZEUGDACH, FAHRZEUGDACH FÜR EIN KRAFTFAHRZEUG SOWIE VERFAHREN**
ASSEMBLY HAVING TWO COVERS FOR A VEHICLE ROOF, VEHICLE ROOF FOR A MOTOR VEHICLE, AND METHOD
SYSTÈME COMPORTANT DEUX PANNEAUX POUR TOIT DE VÉHICULE, TOIT DE VÉHICULE POUR VÉHICULE AUTOMOBILE, ET PROCÉDÉ

(30) Priorität: 02.05.2016 DE 102016108102
(43) Veröffentlichungstag der Anmeldung: 13.03.2019
(73) Patentinhaber: Webasto SE, 82131 Stockdorf (DE)
(72) Erfinder: RIPA, Thomas, 82211 Herrsching (DE); LIPOVSKY, Christian, 80809 München (DE)
(74) Vertreter: Epping - Hermann - Fischer
(86) Internationale Anmeldenummer: PCT/EP2017/059958
(87) Internationale Veröffentlichungsnummer: WO 2017/191014

(56) Entgegenhaltungen:
- EP-A1- 2 072 304
- EP-A1- 3 205 522
- DE-A1-102012 023 098
- DE-A1-102012 201 091

## Beschreibung

Die Erfindung betrifft eine Anordnung mit zwei Deckeln für ein Fahrzeugdach. Darüber hinaus betrifft die Erfindung ein Fahrzeugdach mit einer solchen Anordnung sowie ein Verfahren zum Öffnen eines Deckels.

Anordnungen mit einem Deckel für ein Fahrzeugdach sind beispielsweise als Spoilerdächer bekannt. Der Deckel wird bei einem Öffnungsvorgang typischerweise mittels eines Antriebsschlittens in Richtung eines Fahrzeughecks verschoben. In seitlichen Bereichen des Deckels sind dabei Mechaniken vorgesehen, um den Deckel zunächst in eine Lüfterstellung anzuheben, bevor er in Öffnungsrichtung weiter nach hinten in eine Offenstellung zum Freigeben der Dachöffnung verschoben wird. Eine solche Anordnung, die ein Ausstellen und Verschieben eines Deckels ermöglicht, ist zum Beispiel in dem Dokumente DE 10 2011 018 151 A1 beschrieben. Weiterhin offenbaren die DE 10 2012 201091 A1 sowie die EP 2 072 304 A1 ein Antriebssystem bzw. ein Schiebedachsystem mit einem Deckel zum Verschließen oder Freigeben einer Dachöffnung. Die EP 3 205 522 A1 ist ein Stand der Technik gemäß Art. 54(3) EPÜ (Europäische Patentanmeldung EP 16 154 863.1, eingereicht am 09.02.2016 und veröffentlicht am 16.08.2017) und betrifft einen Antriebsmechanismus für ein erstes und ein zweites bewegliches Panel für ein Fahrzeug, wobei zwei Gleitmechanismen vorgesehen sind. Die DE 10 2012 023098 A1 betrifft ein Schiebedach eines Fahrzeugs mit einem Deckel, der mittels einer vorderen Lagereinrichtung und einer hinteren Lagereinrichtung am Fahrzeugdach an Längsführungen bewegbar gelagert und beim Freigeben einer Dachöffnung mit angehobenem Hinterrand über eine angrenzende Dachfläche bewegbar ist.
Die Mechaniken weisen typischerweise Hebel, Lager und/oder Kulissenführungen auf. Beispielsweise ist ein Ausstellhebel in einem hinteren Bereich des Deckels ortsfest gelagert und realisiert im Zusammenwirken mit einem Antriebsschlitten einen Ausstell- und Öffnungsvorgang zum Freigeben der Dachöffnung. Die Mechaniken benötigen zum Ermöglichen des Öffnungsvorgangs entsprechenden Bauraum, welcher mit unter den Platz einer Fahrgastzelle eines Kraftfahrzeugs verringert. Gegebenenfalls wird die Dachöffnung auch bei einem vollständig geöffneten Deckel nicht komplett freigegeben, sodass zum Beispiel ein Teil der Dachöffnung von einem vorderen Teil des geöffneten Deckels verdeckt bleibt.

Anders ist dies beispielsweise bei sogenannten außengeführten Schiebedächern, bei denen der Ausstellhebel an der hinteren Kante des Deckels zusammen mit dem Deckel relativ zum übrigen Fahrzeugdach in die Öffnungsrichtung verschoben wird.

Der Erfindung liegt die Aufgabe zugrunde, eine Anordnung mit zwei Deckeln für ein Fahrzeugdach, ein Fahrzeugdach sowie ein Verfahren anzugeben, die zu einem zuverlässigen Öffnen und Schließen der Deckel beitragen.

Es wird eine Anordnung mit zwei Deckeln für ein Fahrzeugdach eines Fahrzeugs offenbart. Der erste Deckel ist zum Öffnen mittels einer Ausstellmechanik in einem Bereich einer hinteren Deckelkante anhebbar und in einer Öffnungsrichtung über das Fahrzeugdach in eine Offenstellung verschiebbar. Die dem ersten Deckel zugeordnete Ausstellmechanik weist einen entlang der Öffnungsrichtung mittels eines Antriebes in einer Führungsschiene verschiebbaren Antriebsschlitten zum Öffnen des ersten Deckels auf. Weiter weist die Ausstellmechanik einen Ausstellhebel auf, welcher schwenkbar und verschiebbar mit dem ersten Deckel gekoppelt ist. Weiter weist die Ausstellmechanik einen Lagerschlitten auf, an welchem der Ausstellhebel schwenkbar gekoppelt ist. Die Ausstellmechanik weist einen Sperrhebel auf, welcher an dem Lagerschlitten beweglich gelagert ist und über welchen der Lagerschlitten in einem ersten Zustand des Sperrhebels in einer ortsfesten Position bezüglich der Führungsschiene gehalten ist. Die Anordnung ist derart ausgebildet, dass ausgehend von einer Schließstellung des ersten Deckels bei einem Verschieben des Antriebsschlittens mittels der Ausstellmechanik der erste Ausstellhebel ausgestellt wird und anschließend bei einem weiteren Verschieben der Antriebsschlitten derart mit dem Sperrhebel zusammenwirkt, dass der Sperrhebel in einen zweiten Zustand überführt wird, in welchem der Lagerschlitten bezüglich der Führungsschiene mittels des Antriebsschlittens verschiebbar ist. Der Sperrhebel weist ein Verriegelungselement auf, welches den Sperrhebel in dem ersten Zustand sichert. Das Verriegelungselement greift zum Sichern des Sperrhebels in ein Lager des Lagerschlittens ein. Die Anordnung ermöglicht ein Fahrzeugdach mit zwei Deckeln, welche sich durch eine platzsparende Anordnung der Ausstellmechanik sowie eine geringe Beanspruchung von Bauraum auszeichnen. Auch ist es möglich, die Anordnung für verschiedene Mechanikaufbauten, -längen und/oder Wölbungen der Führungsschienen zu verwenden, da beispielsweise keine wesentlichen Anpassungen hinsichtlich der jeweiligen Geometrien nötig sind. Weiterhin ist die Anordnung zum Entriegeln des Lagerschlittens unabhängig von einem Abstand des Antriebsschlittens zu dem Lagerschlitten in einer Schließstellung.

Weiterhin ist ein präziser Betrieb der Anordnung ermöglicht. Die Anordnung ermöglicht ein sicheres Verriegeln und Entriegeln des Lagerschlittens. Weiterhin ist eine hohe Lagesicherung des Lageschlittens bewerkstelligbar.

Der Sperrhebel weist ein Verriegelungselement auf, welches den Sperrhebel in dem ersten Zustand sichert. Mittels des Verriegelungselements ist der Sperrhebel in dem ersten Zustand sicherbar beziehungsweise arretierbar, sodass dieser nicht versehentlich oder durch Fremdeinwirkung in den zweiten Zustand überführt werden kann. Dadurch wird sichergestellt, dass der Lagerschlitten in den ersten Zustand des Sperrhebels bezüglich der Führungsschiene ortsfest gehalten ist. Das Verriegelungselement ist beispielsweise so ausgebildet, dass dieses eine Bewegung, insbesondere eine Rotation des Sperrhebels, blockiert (in dem ersten Zustand). Das Verriegelungselement ist entsicherbar, beispielsweise durch Betätigung des Antriebsschlittens, sodass der Sperrhebel freigegeben und in den zweiten Zustand überführbar ist.

Das Verriegelungselement greift zum Sichern des Sperrhebels in ein in dem Lagerschlitten ausgebildetes Lager ein. Beispielsweise weist der Lagerschlitten hierzu eine Aussparung, eine Tasche, eine Nut oder dergleichen auf, in welche das Verriegelungselement eingreift. Das Lager kann auch als Verriegelungslager bezeichnet werden.

Die beschriebenen Kopplungen sind, soweit nicht anders angegeben, als mechanische Kopplungen zu verstehen.

Die verwendeten Ortsangaben oder Richtungsangaben wie "hinten" oder "vorne" sind auf eine Fahrzeuglängsachse und eine übliche Fahrtrichtung eines betriebsbereiten Kraftfahrzeugs bezogen. Die Fahrzeuglängsachse kann auch als horizontale oder x-Achse in zugehöriger X-Richtung bezeichnet werden. Das Ausstellen beziehungsweise Anheben des Deckels erfolgt im Wesentlichen in einer Vertikalrichtung beziehungsweise positiven Z-Richtung. Bei dem Öffnungsvorgang wird der erste Ausstellhebel beispielsweise in der x-z-Ebene ausgestellt. Unter dem hinteren Bereich des Deckels ist beispielsweise der Bereich zu verstehen, welcher ausgehend von einer Mitte des Deckels einem Fahrzeugheck zugewandt ist.

Das Verschieben des Deckels über das Fahrzeugdach bedeutet, dass der Deckel nach einem Anheben oder Ausstellen im Bereich der hinteren Deckelkante über eine Außenseite des Fahrzeugdachs geschoben wird. Bevorzugt handelt es sich bei der Anordnung um eine Anordnung eines Doppelspoiler- oder Zweideckel-Spoilerdaches, wobei sowohl der erste Deckel als auch der zweite Deckel über das Fahrzeugdach nach hinten verschiebbar sind.

Der Sperrhebel ist beispielsweise als betätigbarer Sperrhebel ausgebildet. Mit anderen Worten ist in einer Schließstellung des ersten Deckels keine direkte Verbindung zwischen dem Antriebsschlitten und dem Sperrhebel realisiert. In einem anfänglichen Stadium ist keine Kraftkopplung des Antriebsschlittens mit dem Sperrhebel realisiert. Erst nach einem Verschieben des Antriebsschlittens und Ausstellen des ersten Deckels wird der Sperrhebel ab einem Kontaktzeitpunkt mit dem Antriebsschlitten betätigt, sodass der Lagerschlitten entriegelt wird. Bei einem Öffnungsvorgang wirken der Antriebsschlitten und der Sperrhebel also erst zu einem späteren Zeitpunkt direkt zusammen und sind berührend in Eingriff. Unter dem bewegbaren Sperrhebel wird beispielsweise ein am Lagerschlitten verschiebbar angeordneter Sperrhebel beziehungsweise ein schwenkbar angeordneter Sperrhebel verstanden. Die Betätigung des Sperrhebels, also eine Bewegung des Sperrhebels zum Entriegeln des Lagerschlittens, erfolgt beispielsweise in der X-Z-Ebene.

Bei der beschriebenen Anordnung kann der erste Deckel, welcher auch als vorderer Deckel bezeichnet werden kann, über den zweiten Deckel, welcher als hinterer Deckel bezeichnet werden kann, verschoben werden. Der zweite Deckel ist mit einer entsprechenden zweiten Ausstellmechanik betätigbar, sodass dieser ebenfalls ausgestellt werden kann. Die beiden Deckel werden anschließend nach hinten über das Fahrzeugdach geschoben, so dass die Dachöffnung des Fahrzeugdachs maximal freigegeben werden kann. Dies wird insbesondere dadurch ermöglicht, dass der vordere Deckel durch die erste Ausstellmechanik ausgestellt und dann aufgrund des verschiebbaren Lagerschlittens, welcher zugleich ein Lager für den Ausstellhebel darstellt, nach hinten bewegbar ist.

Ausgehend von einer Schließstellung der jeweiligen Deckel, in welcher der vordere Deckel im Wesentlichen auf selber Höhe wie der hintere Deckel angeordnet ist und die beiden Deckel die Dachöffnung bündig abschließen, kann ein Öffnungsvorgang des Deckels beispielsweise wie folgt durchgeführt werden. Zum Ausstellen des Deckels wird der erste Ausstellhebel mittels der ersten Ausstellmechanik durch Verschieben des Antriebsschlittens in X-Richtung verschwenkt. Das Verschwenken erfolgt bezüglich einer Schwenkachse des Lagerschlittens. Zu diesem Zeitpunkt ist der Lagerschlitten ortsfest bezüglich der Führungsschiene festgelegt oder arretiert, sodass der erste Ausstellhebel aufgerichtet werden kann und der Deckel im Bereich der hinteren Deckelkante angehoben wird. Auf diese Weise wird zum Beispiel eine Lüfterstellung des ersten Deckels erreicht. Der erste Ausstellhebel muss dabei die Kräfte des Deckels insbesondere in Z-Richtung aufnehmen und darf nicht unkontrolliert kippen. Aus diesem Grund wird dieser zum Lagerschlitten hin verriegelt beziehungsweise in einer arretierten Position gehalten. Bei dem Verschieben bewegt sich der Antriebsschlitten in Richtung des ortsfesten Lagerschlittens. Dabei wird der Deckel zumindest teilweise aufgrund der verschiebbaren Kopplung zu dem Ausstellhebel nach hinten verschoben.

Bei einem weiteren Verschieben des Antriebsschlittens betätigt der Antriebsschlitten den Sperrhebel derart, dass der Lagerschlitten bezüglich der Führungsschiene entriegelt wird. Mit anderen Worten ist nun ein Verschieben des Lagerschlittens und somit des Ausstellhebels und Sperrhebels in X-Richtung freigegeben. Der Antriebsschlitten nimmt bei einem nachfolgenden weiteren Verschieben den Lagerschlitten in X-Richtung mit nach hinten mit, sodass der erste Deckel zusammen mit dem Lagerschlitten in X-Richtung nach hinten verschoben wird.

Gemäß einer Ausgestaltung ist der Sperrhebel schwenkbar an dem Lagerschlitten gelagert. Der Sperrhebel ist bezüglich einer Schwenkachse schwenkbar an den Lagerschlitten gelagert. Dadurch ist eine kontrollierte Bewegung des Sperrhebels realisierbar.

Gemäß einer weiteren Ausgestaltung weist die Anordnung eine bezüglich der Führungsschiene ortsfeste Kulisse auf, welche mit einem ersten Koppelelement des Sperrhebels derart zusammenwirkt, dass der Sperrhebel in dem ersten Zustand ortsfest bezüglich der Führungsschiene gehalten ist und dass ein Verschieben des Sperrhebels bezüglich der Führungsschiene in dem zweiten Zustand freigegeben ist. Mit anderen Worten ist der Sperrhebel über das erste Koppelelement zumindest in dem ersten Zustand und beim Übergang in den zweiten Zustand in der ortsfesten Kulisse geführt. Unter einer Kulisse wird im vorliegenden Kontext eine zweiseitige (beidseitige) oder auch einseitige Zwangsführung eines entsprechenden Koppelelements verstanden. Die Kulisse gibt also einen Bahnverlauf für das Koppelelement beim Übergang von dem ersten Zustand in den zweiten Zustand vor.

Der Kulissenverlauf ist dabei so ausgebildet, dass eine Bewegung des Sperrhebels und somit des daran gekoppelten Lagerschlittens in X-Richtung verriegelt beziehungsweise blockiert ist, während nach einem Überführen des Sperrhebels in den zweiten Zustand eine Bewegung des Sperrhebels und somit des Lagerschlittens in X-Richtung freigegeben ist. Die Kulisse ist beispielsweise in der Führungsschiene selbst oder in einem separaten Bauteil, welches ortsfest bezüglich der Führungsschiene angeordnet ist, ausgebildet. Durch die Kulisse sind die beschriebenen Funktionen besonders gut realisierbar. Insbesondere kann ein sicheres Überführen von dem ersten in den zweiten Zustand des Sperrhebels gewährleistet werden.

Gemäß einer weiteren Ausgestaltung weist der Sperrhebel ein zweites Koppelelement auf, welches derart in dem ausgestellten Zustand des Ausstellhebels mit dem Antriebsschlitten zusammenwirkt, dass der Sperrhebel von dem ersten Zustand in den zweiten Zustand überführbar ist. Mit anderen Worten betätigt der Antriebsschlitten das zweite Koppelelement des Sperrhebels, sobald der Antriebsschlitten im ausgestellten Zustand des Ausstellhebels mit dem Sperrhebel zusammenwirkt.

Ein Koppelelement ist beispielsweise als ein Gleitelement, insbesondere als Drehgleiter, ausgebildet. Weiterhin kann das Koppelelement auch als Nocken, Gleiter oder anderes Eingriffselement ausgebildet sein.

Gemäß einer weiteren Ausgestaltung weist der Antriebsschlitten eine Schlittenkulisse auf, mit welcher das zweite Koppelelement des Sperrhebels zum Überführen in den zweiten Zustand in Eingriff ist. Die Schlittenkulisse ist somit Teil des Antriebsschlittens, etwa integraler Bestandteil. Sobald der Antriebsschlitten zur Betätigung des Sperrhebels mit diesem in Kontakt tritt, gerät das zweite Koppelelement des Sperrhebels in Eingriff mit der Schlittenkulisse. Die Schlittenkulisse ist derart ausgebildet, dass das Überführen des ersten in den zweiten Zustand gesteuert wird. Beispielsweise weist die Schlittenkulisse einen Verlauf auf, der zunächst einen im Wesentlichen zur Führungsschiene parallelen Verlauf hat und in einem anschließenden Abschnitt übergeht, der eine vertikale Komponente hat. Dadurch wird der Sperrhebel beispielsweise in der X-Z-Ebene bewegt beziehungsweise verschwenkt.

Gemäß einer weiteren Ausgestaltung ist die Schlittenkulisse lösbar an dem Antriebsschlitten angeordnet. Mit anderen Worten weist der Antriebsschlitten ein Bauelement auf, welches lösbar an dem Antriebsschlitten gekoppelt ist und welches die Schlittenkulisse aufweist. Das Bauelement ist mechanisch an dem Antriebsschlitten festgelegt und ist Teil des Antriebsschlittens. Beispielsweise ist das Bauelement mittels Formschluss und/oder Reibschluss an dem Antriebsschlitten angeordnet. Zusätzlich oder alternativ verrastet das Bauelement mit dem Antriebsschlitten.
Das lösbare Bauelement bzw. die lösbare Schlittenkulisse eröffnet die Möglichkeit, dass unterschiedliche Schlittenkulissen, insbesondere unterschiedlich hinsichtlich ihrer Längen bezüglich der Führungsschiene, mit ein und demselben Antriebsschlitten kombinierbar sind. Somit können mit ein und demselben Antriebsschlitten verschiedene Mechaniklängen und Schienenwölbungen realisiert werden. Je nach Ausgestaltung und/oder Länge der Führungsschiene kann mittels der entsprechenden Schlittenkulisse beziehungsweise mittels des entsprechenden Bauelements mit Schlittenkulisse auf die neuen mechanischen konstruktiven Rahmenbedingungen eingegangen werden. Dies trägt im erheblichen Maße dazu bei, dass die Anordnung zum Entriegeln des Lagerschlittens unabhängig von einem Abstand des Antriebsschlittens zu dem Lagerschlitten in einer Schließstellung ist.

Gemäß einer weiteren Ausgestaltung ist die Schlittenkulisse derart ausgebildet, dass diese im zweiten Zustand des Sperrhebels ein Mitnehmen des Lagerschlittens durch den Antriebsschlitten steuert. Beispielsweise wird der Sperrhebel bezüglich des Antriebsschlittens im zweiten Zustand mittels der Schlittenkulisse zumindest in X-Richtung verriegelt beziehungsweise arretiert. Dadurch ist der Antriebsschlitten mit dem Sperrhebel gekoppelt, sodass dadurch zu einem Mitnehmen des Lagerschlittens durch den Antriebsschlitten beigetragen wird.

Gemäß einer weiteren Ausgestaltung ist der Antriebsschlitten derart ausgebildet, dass dieser vor dem Überführen des Sperrhebels in den zweiten Zustand mit dem Verriegelungselement zum Entsichern zusammenwirkt, sodass der Sperrhebel in den zweiten Zustand überführbar ist. Beispielsweise weist der Antriebsschlitten einen Anschlag auf, der das Verriegelungselement in der gesicherten Position löst. Mittels des Anschlags lässt sich ohne Zusatzteile eine einfache Entsicherung des Verriegelungselements bewerkstelligen.

Gemäß einer Ausgestaltung ist das Verriegelungselement als Federelement ausgebildet. Das Federelement ist beispielsweise so ausgebildet, dass dieses zumindest teilweise in das (Verriegelungs-)Lager des Lagerschlittens eingreift, wobei eine Federkraft derart wirkt, dass das Federelement in dem Lager gehalten ist. Durch Zusammenwirken mit dem Antriebsschlitten wirkt dieser, etwa mit einem Anschlag, entgegen der Federkraft so mit dem Federelement zusammen, dass das Verriegelungselement aus der Lagerung gelöst wird und eine Bewegung des Sperrhebels freigegeben ist.

Des Weiteren wird ein Fahrzeugdach für ein Kraftfahrzeug beschrieben, welches eine Dachöffnung und eine der zuvor beschriebenen Anordnungen umfasst, wobei die beiden Deckel in einer Schließstellung die Dachöffnung vollständig verschließen.

Das Fahrzeugdach ermöglicht im Wesentlichen die vorgenannten Vorteile und Funktionen.

Des Weiteren wird ein Verfahren zum Öffnen eines Deckels eines Fahrzeugdachs mit zwei Deckeln eines Fahrzeugs offenbart. Das Verfahren weist die Schritte auf:
- Verschieben eines Antriebsschlittens entlang einer Führungsschiene ausgehend von einer Schließstellung des Deckels,
- Ausstellen eines Ausstellhebels des Deckels zum Anheben des Deckels im Bereich einer Hinterkante mittels einer Ausstellmechanik, und
- Zusammenwirken des Antriebsschlittens mit einem beweglichen Sperrhebel derart, dass der Sperrhebel aus einem ersten Zustand, in welchem er einen Lagerschlitten in einer ortsfesten Position bezüglich der Führungsschiene hält, in einen zweiten Zustand überführt wird, in welchem der Lagerschlitten bezüglich der Führungsschiene mittels des Antriebsschlittens verschiebbar ist.

Das Verfahren ermöglicht im Wesentlichen die vorgenannten Vorteile und Funktionen.

Es sei an dieser Stelle darauf hingewiesen, dass die anhand der zuvor beschriebenen Anordnung erläuterten Merkmale und Ausgestaltungen auch als Verfahrensmerkmale Eingang in das Verfahren finden können.

Weitere Ausgestaltungen sind in der nachfolgenden, ausführlichen Beschreibung eines Ausführungsbeispiels unter Zuhilfenahme der angehängten Figuren beschrieben.

Elemente oder Merkmale gleicher Konstruktion oder Funktion sind figurenübergreifend mit den gleichen Bezugszeichen versehen. Bereits mit Hilfe von Bezugszeichen beschriebene Elemente oder Merkmale sind nicht zwingend in allen Figuren mit Bezugszeichen versehen.

In den Figuren zeigen:
- Figur 1: eine schematische, perspektivische Ansicht eines Fahrzeugdachs,
- Figuren 2A bis 2C: jeweils eine schematische, perspektivische Teilansicht einer Anordnung für das Fahrzeugdach,
- Figuren 3 bis 6: weitere perspektivische, schematische Ansichten der Anordnung zu verschiedenen Zuständen, und
- Figuren 7 und 8: zwei Seitenteilansichten zweier Anordnungen für ein Fahrzeugdach.

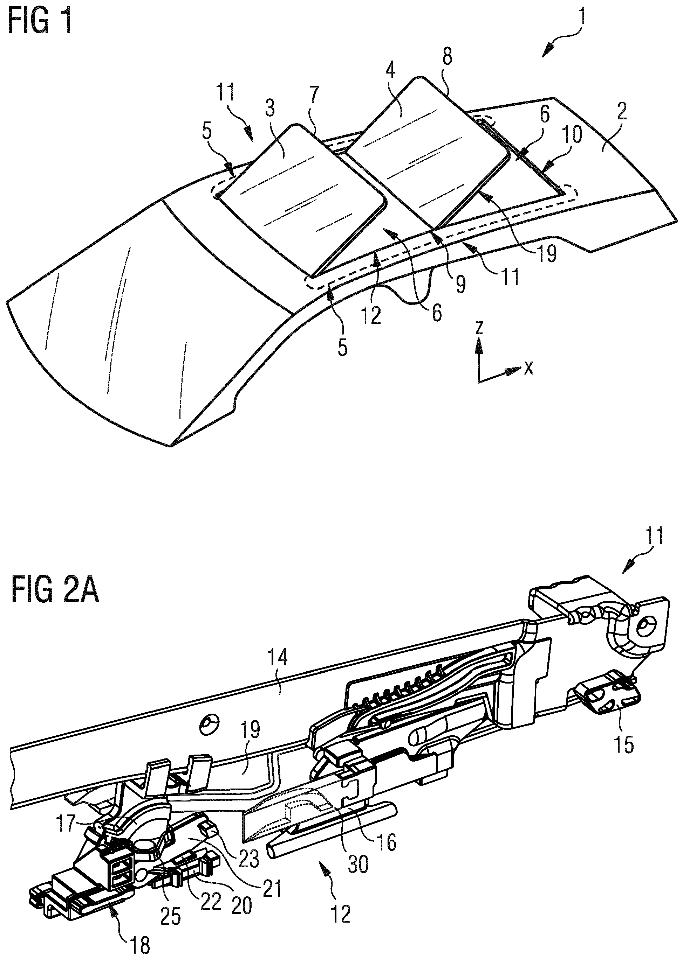

Figur 1 zeigt eine schematische, perspektivische Ansicht eines Kraftfahrzeugs 1 mit einem Fahrzeugdach 2. Das Fahrzeugdach 2 weist eine Dachöffnung 6 auf, die mittels verschiebbarer, verstellbarer Deckel 3 und 4 wahlweise verschließbar oder freigebbar ist. Alternativ sind zwei Dachöffnungen vorgesehen, die jeweils von einem Deckel 3, 4 verschließbar und freigebbar sind. Der erste Deckel 3 (in Figur 1 links) wird als vorderer Deckel und der zweite Deckel 4 wird als hinterer Deckel bezeichnet. Das Fahrzeugdach 2 hat vorzugsweise beidseitig angeordnete Führungsschienen 5, in denen die Deckel 3, 4 verschiebbar gelagert sind. Der vordere Deckel 3 weist eine hintere Deckelkante 7 und der hintere Deckel 4 eine hintere Deckelkante 8 auf. In einer Schließstellung der jeweiligen Deckels 3, 4, etwa wenn die Deckel 3, 4 bündig mit dem Fahrzeugdach 2 abschließen (nicht gezeigt), bestimmen die jeweiligen Deckelkanten 7, 8 eine jeweilige Schließposition 9, 10. In der Schließstellung verschließen die beiden Deckel 3, 4 die Dachöffnung 6 vollständig. Die Deckel 3 und 4 sind vorzugsweise als Glasdeckel ausgebildet.

Die verwendeten Orts- oder Richtungsangaben wie "hinten" oder "vorne" sind auf eine Fahrzeuglängsachse und eine übliche Fahrtrichtung eines betriebsbereiten Kraftfahrzeugs bezogen. Die Fahrzeuglängsachse kann auch als Horizontale oder X-Achse mit zugehöriger X-Richtung bezeichnet werden. Das Ausstellen bzw. Anheben der Deckel 3, 4 erfolgt im Wesentlichen in einer Vertikalrichtung beziehungsweise Z-Richtung und kann mit der Orts- oder Richtungsangabe "oben" bezeichnet werden. Ein entsprechendes X-Z-Koordinatensystem ist in Figur 1 eingezeichnet. Somit ist unter dem hinteren Bereich des jeweiligen Deckels 3, 4 beispielsweise der Bereich zu verstehen, welcher ausgehend von einer Mitte des jeweiligen Deckels 3, 4 einem Fahrzeugheck in X-Richtung zugewandt ist. Zum Freigeben oder Schließen der Dachöffnung 6 ist eine Anordnung 11 vorgesehen, die die Führungsschienen 5 umfassen. Die Anordnung 11 dient dem Zweck, die Deckel 3 und 4 aus einer Schließstellung in eine Offenstellung zu verschieben oder wieder zurück in eine Schließstellung zu bewegen. Hierzu weist die Anordnung 11 jeweils erste und zweite Ausstellmechaniken 12 und 13 auf, mittels derer die Deckel 3 und 4 über einen hinteren Teil des Fahrzeugdachs 2 geschoben werden können. In diesem Zusammenhang ist es erforderlich, dass die Deckel 3 und 4 angehoben werden, da sie in Schließstellung bündig mit der Oberseite des Fahrzeugdachs 2 schließen. Bei einem typischen Bewegungsablauf wird zunächst die jeweilige hintere Deckelkante 7, 8 des jeweiligen Deckels 3, 4 ausgestellt (s. Figur 1). Eine solche Zwischenposition wird auch als Lüfterstellung bezeichnet. Im weiteren Verlauf des Öffnungsprozesses wird der jeweilige Deckel 3, 4 danach in eine Öffnungsrichtung nach hinten über das Fahrzeugdach 5 in die Offenstellung verschoben, wie bereits eingangs erläutert. Bei der Anordnung 11 handelt es sich um solche für ein Doppelspoilerdach, wie bereits eingangs erläutert.

Nachfolgend wird primär auf den vorderen Deckels 3 in Bezug auf eine Seite des Kraftfahrzeugs 1 eingegangen. Die beschriebenen Komponenten sind jedoch spiegelbildlich zueinander in Längsebene des Kraftfahrzeugs 1 auf beiden Seiten der Dachöffnung 6 angeordnet. Der hintere Deckel 4 wird beispielsweise analog zu dem vorderen Deckel 3 mittels der zweiten Ausstellmechanik 13 zum Freigeben der Dachöffnung 6 betätigt und ist vollständig oder fast vollständig über das Fahrzeugdach 2 verschiebbar. Es sind jedoch andere Ausführungen denkbar, beispielsweise solche, bei denen der zweite Deckel 4 nicht vollständig über das Fahrzeugdach 2 nach hinten verschoben werden kann.

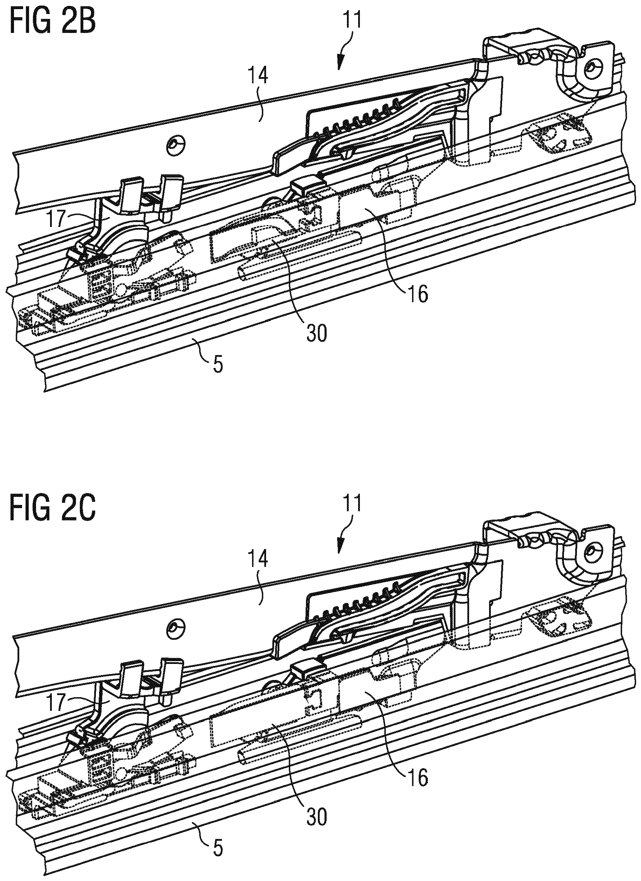

Figuren 2A, 2B und 2C zeigen jeweils eine schematische, perspektivische Teilansicht der Anordnung 11. Figur 2A zeigt hierbei die Anordnung 11 ohne die Führungsschiene 5. In den Figuren 2B und 2C ist jeweils zusätzlich auch die Führungsschiene 5 dargestellt. In Figur 2B sind zum besseren Verständnis nur die Umrisse des Bauelements 30 eingezeichnet, so dass dahinterliegende Elemente nicht verdeckt werden. In Figur 2C ist das Bauelement 30 undurchsichtig dargestellt.

Die Anordnung 11 hat einen Deckelträger 14, der an einem vorderen Ende ein Gleitelement 15 aufweist. Über das Gleitelement 15 ist der Deckelträger 14 verschiebbar und drehbar in der Führungsschiene 5 oder einer anderen Führung/Kulisse gelagert. Es gilt zu beachten, dass in den nachfolgend beschriebenen Figuren ausschließlich der Deckelträger 14 dargestellt ist, welcher mit dem vorderen Deckel 3 mechanisch fest gekoppelt ist. Ein Verschieben des vorderen Deckels 3 ist demnach gleichbedeutend mit einem Verschieben des Deckelträgers 14.

Die erste Ausstellmechanik 12 der Anordnung 11 umfasst einen Antriebsschlitten 16, der in der nicht dargestellten Führungsschiene 5 verschiebbar gelagert ist. Die Ausstellmechanik 12 umfasst weiter einen ersten Ausstellhebel 17, welcher schwenkbar um eine nicht dargestellte Schwenkachse an einem Lagerschlitten 18 gelagert ist. Der erste Ausstellhebel 17 ist zudem schwenkbar und verschiebbar mit dem vorderen Deckel 3 beziehungsweise dem Deckelträger 14 gekoppelt (nicht dargestellt). Der Lagerschlitten 18 ist verschiebbar in der nicht dargestellten Führungsschiene 5 angeordnet.

Die erste Ausstellmechanik 12 umfasst weiterhin eine Ausstellstange 19, welche mit dem Antriebsschlitten 16 sowie mit dem Ausstellhebel 13 in einer nicht näher erläuterten Weise gekoppelt ist.

Ausgehend von einer Schließstellung zumindest des vorderen Deckels 3 wird der Antriebsschlitten 16 mittels eines Antriebs wie einem Elektromotor betätigt und in X-Richtung verfahren. In diesem ersten Bewegungsabschnitt wird der Ausstellhebel 17 aufgrund der Ausstellstange 19 in Z-Richtung angehoben und somit ausgestellt. Die ausgestellte Position ist in den Figuren 1, 2 und 3 gezeigt und wird auch als Lüfterstellung des Deckels 3 bezeichnet. Sobald der Ausstellhebel 17 die ausgestellte Position erreicht hat, wird der Ausstellhebel 17 in seiner Position arretiert, insbesondere bezüglich des Lagerschlittens 18. Dabei koppelt die Ausstellstange 19 von dem Ausstellhebel 17 und/oder dem Antriebsschlitten 16 ab, so dass bei einem weiteren Verschieben des Antriebsschlittens 16 keine Kraft mehr auf den Ausstellhebel 17 übertragen wird. Das Arretieren des Ausstellhebels 17, also die Verriegelung dessen in X-Richtung sowie dessen Festlegen in Position und Lage, erfolgt beispielsweise durch Verriegeln der an diesen gekoppelten Ausstellstange 19 bezüglich der X-Richtung bzw. bezüglich des Deckelträgers 14. Andere Ausführungen einer Verriegelung des ausgestellten Ausstellhebels 17, eines Festlegens dessen in seiner Position und/oder eines Mitnehmens dessen sind denkbar. Eine mögliche Variante ist beispielsweise in der taggleich vom selben Anmelder eingereichten Anmeldung vorzufinden (Titel: "Anordnung mit einem Deckel für ein Fahrzeugdach, Fahrzeugdach für ein Kraftfahrzeug und Verfahren zum Bewegen eines Deckels für ein Fahrzeugdach"; internes Aktenzeichen: P2016,0501; internes Aktenzeichen des Anmelders: R1755-16).

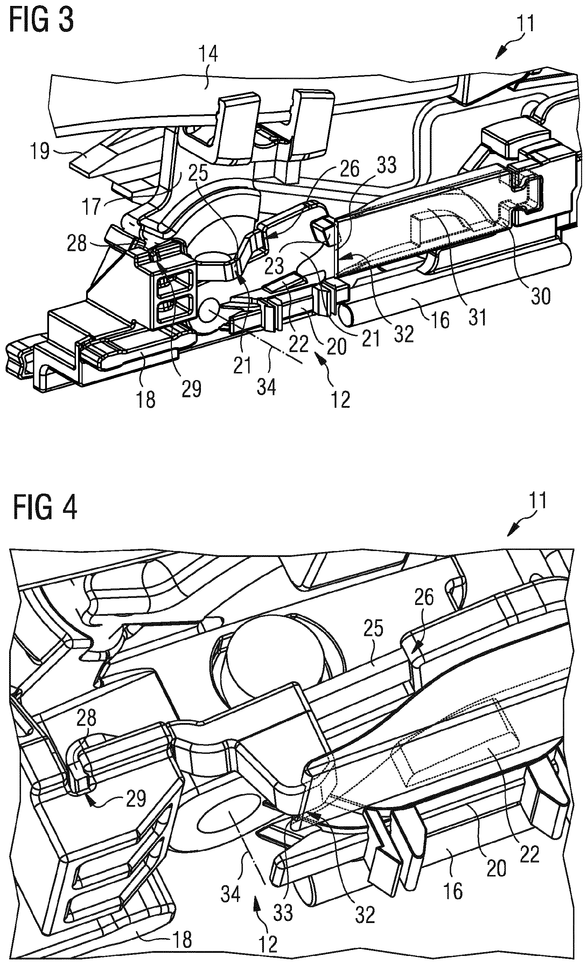

Gleichzeitig oder anschließend wird der Antriebsschlitten 16 in einem weiteren Bewegungsabschnitt weiter in X-Richtung gegen den Lagerschlitten 18 verschoben und nimmt beispielsweise die in Figuren 2 und 3 gezeigten Positionen ein.

Ausgehend von der Schließstellung und somit auch während dieser ersten Bewegungsabschnitte ist der Lagerschlitten 18 in seiner Position bezüglich der Führungsschiene 5 festgelegt. Mit anderen Worten ist eine Bewegung dessen in X-Richtung nicht freigegeben. Hierzu sind eine ortsfeste Kulisse 20 sowie ein drehbar an dem Lagerschlitten 18 gelagerter Sperrhebel 21 vorgesehen (siehe vergrößerte Darstellung in Figur 3 und 4). Die ortsfeste Kulisse 20 ist positionsfest bezüglich der Führungsschiene 5 und in einem separaten Bauteil oder Bauelement ausgebildet. Alternativ ist die Kulisse 20 in der Führungsschiene 5 ausgebildet. Der Sperrhebel 21 weist ein erstes Koppelelement 22 und ein zweites Koppelelement 23 auf, die als Gleitelemente ausgebildet sind. Die Koppelelemente 22 und 23 können auch als Eingriffselemente bezeichnet werden.

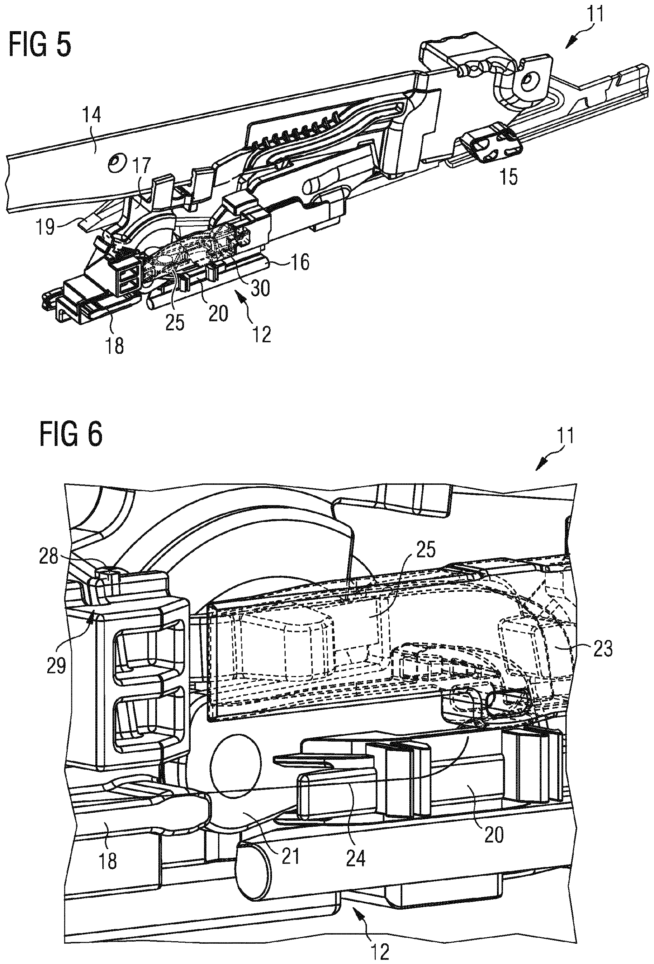

Ausgehend von der Schließstellung befindet sich der Sperrhebel 21 in einem ersten Zustand, in welchem er den Lagerschlitten 18 in einer ortsfesten Position bezüglich der nicht gezeigten Führungsschiene 5 hält. Hierbei ist das erste Koppelelement 22 im Eingriff mit der ortsfesten Kulisse 20, wodurch eine Bewegung des Lagerschlittens 18 in X-Richtung blockiert ist. Der Verlauf 24 der Kulisse 20 ist dabei, wie in Figur 6 als Linie angedeutet, ausgebildet, wobei sich das erste Koppelelement 22 in dem ersten Zustand des Sperrhebels 21 in einem im Wesentlichen vertikalen Abschnitt befindet.

Weiterhin weist der Sperrhebel 21 ein Federelement 25 auf. Bei dem Federelement 25 handelt es sich um ein Verriegelungselement aus einen gebogenen Metall- oder Federdraht. Es ist mit einem ersten Ende 26 mit dem Sperrhebel 21 fest verbunden. Das Federelement 25 erstreckt sich im Wesentlichen in X-Richtung und hat eine Wölbung oder Ausbuchtung 27 in Y-Richtung, die in eine Bahn (in X-Richtung) des Antriebsschlittens 16 hineinragt. Mit einem freien zweiten Ende 28 ragt das Federelement 25 in ein Lager 29 des Lagerschlittens 18 ein. Dabei greift das zweite Ende 28, welches eine gebogene, hakenartige Lasche hat, in eine Aussparung in dem Lagerschlitten 18, etwa eine Nut oder Tasche, ein. Das Federelement 25 ist bezüglich des festgelegten ersten Endes 26 vorgespannt, so dass eine Federkraft das zweite Ende 28 in dem Lager 29 hält. Das Eingreifen des Federelements 27 ist in Figur 4 in der perspektivischen, schematischen Detailansicht vergrößert dargestellt. Dadurch ist der Sperrhebel 21 in einer Drehung um seine Schwenkachse 34 bezüglich des Lagerschlittens 18 blockiert. Mit anderen Worten ist der Sperrhebel 21 in seinem ersten Zustand gehalten oder gesichert. Alternative Ausgestaltungen der Verriegelung des Sperrhebels 21 und/oder des Federelements 25 sind denkbar, beispielsweise als Wickelfeder oder Drehfeder.

Aufgrund der ortsfesten Position des Lagerschlittens 18, bewegt sich der Antriebsschlitten 16 in den ersten Bewegungsabschnitten relativ zu dem Lagerschlitten 18 auf diesen zu.

Wird nun der Antriebsschlitten 16 weiter in X-Richtung in Richtung des Lagerschlittens 18 verfahren, so wirkt der Antriebsschlitten 16 mit dem Sperrhebel 21 wie nachfolgend beschrieben zusammen, um wie eingangs erwähnt ein Verschieben des Lagerschlittens 18 in X-Richtung freizugeben.

Der Antriebsschlitten 16 hat ein Bauelement 30, in welchem eine Kulisse 31 (auch Schlittenkulisse) ausgebildet ist. Die Kulisse 31 hat, wie in Figur 3 strichliert angedeutet, einen Verlauf, der sich aus einem bezüglich der X-Richtung vertikal nach unten weisenden Abschnitt, der dem Lagerschlitten 18 abgewandt ist, sowie einen horizontal verlaufenden Abschnitt, der dem Lagerschlitten 18 zugewandt ist, zusammensetzt. An einem dem Lagerschlitten 18 zugewandten Ende 32 des Bauelements 30 ist ein Anschlag 33 vorgesehen.

Bei dem weiteren Verschieben des Antriebsschlittens 16 tritt der Anschlag 33 mit der Ausbuchtung 27 des Federelements 25 in Kontakt. Dabei wird aufgrund der Ausbuchtung 27 entgegen einer Federkraft das zweite Ende 28 des Federelements 25 aus dem Lager 29 gehoben, sodass die Rotationsverriegelung des Sperrhebels 21 gelöst, etwa entsichert, ist. Weiterhin tritt gleichzeitig oder danach das zweite Koppelelement 23 in die Kulisse 31 des Bauelements 30 ein. Dadurch, dass das zweite Koppelelement 23 zunächst in den horizontalen Abschnitt eintaucht, kann der Antriebsschlitten 16 relativ zu dem Lagerschlitten 18 zunächst weiterhin verschoben werden.

Sobald das Koppelelement 23 in den vertikalen Bereich der Kulisse 31 eintritt, wird aufgrund der Zwangsführung (Steuerung) durch die Kulisse 31 der Sperrhebel 21 in Z-Richtung nach unten in den zweiten Zustand bewegt. Dadurch wird das erste Koppelelement 22 in der ortsfesten Kulisse 20 entsprechend in den horizontalen Abschnitt geführt, sodass eine Verriegelung des Lagerschlittens 18 bezüglich der Führungsschiene 5 gelöst ist. Dieser Zustand ist in Figuren 5 und 6 gezeigt. In dem zweiten Zustand des Sperrhebels 21 ist nun das Verschieben des Lagerschlittens 18 freigegeben, die X-Verriegelung aufgehoben.

Bei einem weiteren Verschieben des Antriebsschlittens 16 nimmt dieser nun den Lagerschlitten 18 in X-Richtung mit und schiebt den Deckel 3 in seiner ausgestellten Position in X-Richtung nach hinten über den hinteren Deckel 4 und/oder das Fahrzeugdach 2. Das Mitnehmen erfolgt durch Anschlagen des Antriebsschlittens 16 an den Lagerschlitten 18. Zusätzlich oder alternativ erfolgt das Mitnehmen dadurch, dass das zweite Koppelelement 23 in dem vertikalen Abschnitt der Kulisse 31 des Antriebsschlittens 16 ist, so dass eine relative Bewegung in X-Richtung bezüglich des Sperrhebels 21 und somit des Lagerschlittens 18 zu dem Antriebsschlitten 16 blockiert bzw. verriegelt ist.

Aufgrund der beschriebenen Anordnung 1 mit dem ersten Hebelmechanismus 12 ist es möglich, den Lagerschlitten 18 unabhängig von einem Abstand des Antriebsschlittens 16 zu dem Lagerschlitten 18 in einer Schließstellung des Systems zu entriegeln. Insbesondere ist es nicht notwendig, wie eingangs erwähnt einen Verriegelungshebel vorzusehen, über welchen der Antriebsschlitten 16 mit dem Lagerschlitten 18 gekoppelt und über eine Kulisse geführt ist. Die Anordnung 11 ermöglicht weiter die eingangs genannten Vorteile und Funktionen.

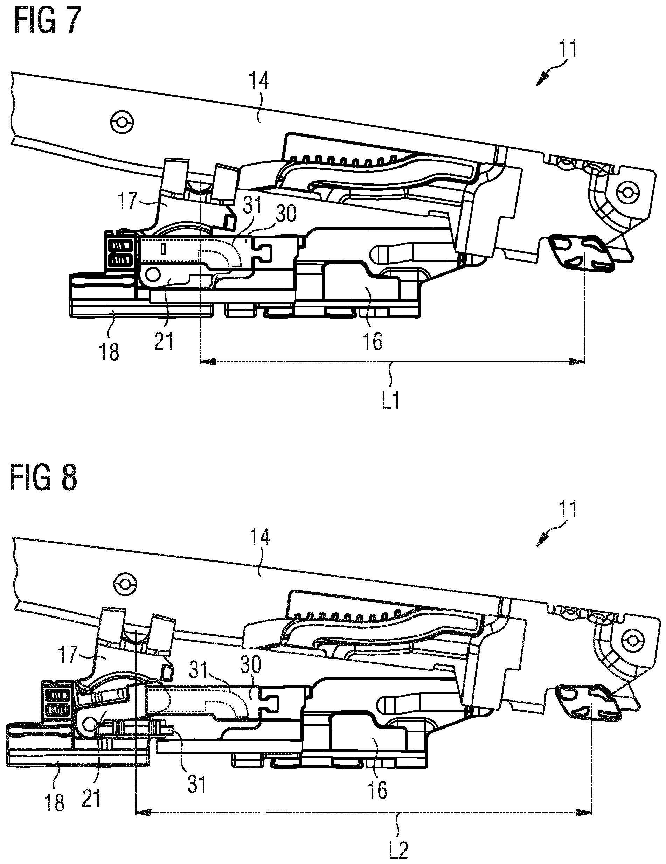

Wie anhand von Figuren 2, 3 und 5 ersichtlich ist, ist das Bauelement 30 integraler Bestandteil des Antriebsschlittens 16. Dabei ist das Bauelement 30 formschlüssig lösbar an dem Antriebschlitten 16 angeordnet, beispielsweise in der Art einer Nut-/Feder-Verbindung. Die Lösbarkeit ist nicht zwingend notwendig, hat jedoch den Vorteil, dass bei verschiedenen Dachgeometrien, wie eingangs beschrieben und in Figur 7 und 8 gezeigt, mit ein und demselben Antriebsschlitten 16 realisierbar sind. Beispielsweise sind verschiedene Abstände L1, L2 zwischen dem Gleitelement 15 und der Kopplung des Ausstellhebels 17 mit dem Deckelträger 14 zu ein und demselben Zustand (beispielsweise Schließstellung des Deckels 4) bewerkstelligbar. Dabei kann stets derselbe Antriebsschlitten 16 verwendet werden, wobei das Bauelement 30 unterschiedliche Längen beziehungsweise Ausdehnungen in X-Richtung hat. Insbesondere ist der horizontale Abschnitt der Kulisse 31 des Bauelements 30 unterschiedlich lang ausgebildet.

### Bezugszeichenliste

- 1: Kraftfahrzeug
- 2: Fahrzeugdach
- 3: vorderer Deckel
- 4: hinterer Deckel
- 5: Führungsschiene
- 6: Dachöffnung
- 7: hintere Deckelkante
- 8: hintere Deckelkante
- 9: Schließposition
- 10: Schließposition
- 11: Anordnung
- 12: erste Ausstellmechanik
- 13: zweite Ausstellmechanik
- 14: Deckelträger
- 15: Gleitelement
- 16: Antriebsschlitten
- 17: Ausstellhebel
- 18: Lagerschlitten
- 19: Ausstellstange
- 20: ortsfeste Kulisse
- 21: Sperrhebel
- 22: erstes Koppelelement
- 23: zweites Koppelelement
- 24: Verlauf
- 25: Federelement
- 26: erstes Ende
- 27: Ausbuchtung
- 28: zweites Ende
- 29: Lager
- 30: Bauelement
- 31: Kulisse
- 32: Ende des Bauelements 30
- 33: Anschlag
- 34: Schwenkachse
- L1: Länge
- L2: Länge

## Patentansprüche

1. Anordnung (11) mit zwei Deckeln (3, 4) für ein Fahrzeugdach (2) eines Fahrzeugs (1), wobei
- der erste Deckel (3) zum Öffnen mittels einer Ausstellmechanik (12) in einem Bereich einer hinteren Deckelkante (7) anhebbar und in einer Öffnungsrichtung über das Fahrzeugdach (2) in eine Offenstellung verschiebbar ist; und
- die dem ersten Deckel (3) zugeordnete Ausstellmechanik (12) aufweist:
-- einen entlang der Öffnungsrichtung mittels eines Antriebes in einer Führungsschiene (5) verschiebbaren Antriebsschlitten (16);
-- einen Ausstellhebel (17), welcher schwenkbar und verschiebbar mit dem ersten Deckel (3) gekoppelt ist;
-- einen Lagerschlitten (18), an welchem der Ausstellhebel (17) schwenkbar gekoppelt ist; und
-- einen Sperrhebel (21), welcher an dem Lagerschlitten (18) beweglich gelagert ist und über welchen der Lagerschlitten (18) in einem ersten Zustand des Sperrhebels (21) in einer ortsfesten Position bezüglich der Führungsschiene (5) gehalten ist;
wobei
- die Anordnung (11) derart ausgebildet ist, dass ausgehend von einer Schließstellung des ersten Deckels (3) bei einem Verschieben des Antriebsschlittens (16) mittels der Ausstellmechanik (12) der Ausstellhebel (17) ausgestellt wird und anschließend bei einem weiteren Verschieben der Antriebsschlitten (16) derart mit dem Sperrhebel (21) zusammenwirkt, dass der Sperrhebel (21) in einen zweiten Zustand überführt wird, in welchem der Lagerschlitten (18) bezüglich der Führungsschiene (5) mittels des Antriebsschlittens (16) verschiebbar ist,
- der Sperrhebel (21) ein Verriegelungselement (25) aufweist, welches den Sperrhebel (21) in dem ersten Zustand sichert, **dadurch gekennzeichnet, dass**
- das Verriegelungselement (25) zum Sichern des Sperrhebels (21) in ein Lager (29) des Lagerschlittens (18) eingreift.

2. Anordnung (11) nach Anspruch 1, wobei der Sperrhebel (21) schwenkbar an dem Lagerschlitten (18) gelagert ist.

3. Anordnung (11) nach einem der vorhergehenden Ansprüche, aufweisend eine bezüglich der Führungsschiene (5) ortsfeste Kulisse (20), welche mit einem ersten Koppelelement (22) des Sperrhebels (21) derart zusammenwirkt, dass der Sperrhebel (21) in dem ersten Zustand ortsfest bezüglich der Führungsschiene (5) gehalten ist und dass ein Verschieben des Sperrhebels (21) bezüglich der Führungsschiene (5) in dem zweiten Zustand freigegeben ist.

4. Anordnung (11) nach einem der vorhergehenden Ansprüche, wobei der Sperrhebel (21) ein zweites Koppelelement (23) aufweist, welches derart in dem ausgestellten Zustand des Ausstellhebels (17) mit dem Antriebsschlitten (16) zusammenwirkt, dass der Sperrhebel (21) von dem ersten Zustand in den zweiten Zustand überführbar ist.

5. Anordnung (11) nach Anspruch 4, wobei der Antriebsschlitten (16) eine Schlittenkulisse (31) aufweist, mit welcher das zweite Koppelelement (23) des Sperrhebels (21) zum Überführen in den zweiten Zustand in Eingriff ist.

6. Anordnung (11) nach Anspruch 4 oder 5, wobei der Antriebsschlitten (16) ein Bauelement (30) aufweist, welches lösbar an dem Antriebsschlitten (16) gekoppelt ist und welches die Schlittenkulisse (31) aufweist.

7. Anordnung (11) nach einem der Ansprüche 5 oder 6, wobei die Schlittenkulisse (31) derart ausgebildet ist, dass diese im zweiten Zustand des Sperrhebels (21) ein Mitnehmen des Lagerschlittens (18) durch den Antriebsschlitten (16) steuert.

8. Anordnung (11) nach einem der Ansprüche 1 bis 7, wobei das Verriegelungselement als Federelement (25) ausgebildet ist.

9. Anordnung (11) nach einem der Ansprüche 1 bis 8, wobei der Antriebsschlitten (16) derart ausgebildet ist, dass dieser vor dem Überführen des Sperrhebels (21) in den zweiten Zustand mit dem Verriegelungselement zum Entsichern zusammenwirkt, so dass der Sperrhebel (21) in den zweiten Zustand überführbar ist.

10. Fahrzeugdach (2) für ein Kraftfahrzeug (1), umfassend
- eine Dachöffnung (6) und
- mindestens eine Anordnung (11) nach einem der Ansprüche 1 bis 9, wobei die beiden Deckel (3, 4) in einer Schließstellung die Dachöffnung (6) verschließen.

11. Verfahren zum Öffnen eines Deckels (3) eines Fahrzeugdachs (2) nach Anspruch 10 eines Fahrzeugs (1), aufweisend die Schritte,
- Verschieben eines Antriebsschlittens (16) entlang einer Führungsschiene (5) ausgehend von einer Schließstellung des Deckels (3),
- Ausstellen eines Ausstellhebels (17) des Deckels (3) zum Anheben des Deckels (3) im Bereich einer Hinterkante (7) mittels einer Ausstellmechanik (12),
- Zusammenwirken des Antriebsschlittens (16) mit einem beweglichen Sperrhebel (21) derart, dass der Sperrhebel (21) aus einem ersten Zustand, in welchem er einen Lagerschlitten (18) in einer ortsfesten Position bezüglich der Führungsschiene (5) hält, in einen zweiten Zustand überführt wird, in welchem der Lagerschlitten (18) bezüglich der Führungsschiene (5) mittels des Antriebsschlittens (16) verschiebbar ist.

## Claims

1. Assembly (11) having two covers (3, 4) for a vehicle roof (2) of a vehicle (1), wherein
- the first cover (3), for opening by means of a set-out mechanism (12), can be raised in a region of a rear cover edge (7) and can be displaced in an opening direction over the vehicle roof (2) into an open position; and
- the set-out mechanism (12) assigned to the first cover (3) has:
-- a drive carriage (16) which can be displaced along the opening direction in a guide rail (5) by means of a drive;
-- a set-out lever (17) which is pivotably and displaceably coupled to the first cover (3);
-- a bearing carriage (18) to which the set-out lever (17) is pivotably coupled; and
-- a blocking lever (21) which is movably mounted on the bearing carriage (18) and via which the bearing carriage (18) is held in a first state of the blocking lever (21) in a positionally fixed position with respect to the guide rail (5);
wherein
- the arrangement (11) is designed in such a way that, starting from a closed position of the first cover (3), the set-out lever (17) is set out by means of the set-out mechanism (12) during a displacement of the drive carriage (16) and then interacts with the blocking lever (21) during a further displacement of the drive carriage (16) in such a way that the blocking lever (21) is transferred into a second state in which the bearing carriage (18) can be displaced with respect to the guide rail (5) by means of the drive carriage (16),
- the blocking lever (21) has a locking element (25) which secures the blocking lever (21) in the first state, **characterized in that**
- to secure the blocking lever (21), the locking element (25) engages in a bearing (29) of the bearing carriage (18).

2. Assembly (11) according to Claim 1, wherein the blocking lever (21) is pivotably mounted on the bearing carriage (18).

3. Assembly (11) according to either of the preceding claims, having a link slot (20) which is positionally fixed with respect to the guide rail (5) and which interacts with a first coupling element (22) of the blocking lever (21) in such a way that, in the first state, the blocking lever (21) is held in a positionally fixed manner with respect to the guide rail (5) and that a displacement of the blocking lever (21) with respect to the guide rail (5) is enabled in the second state.

4. Assembly (11) according to one of the preceding claims, wherein the blocking lever (21) has a second coupling element (23) which interacts with the drive carriage (16) in the set-out state of the set-out lever (17) in such a way that the blocking lever (21) can be transferred from the first state into the second state.

5. Assembly (11) according to Claim 4, wherein the drive carriage (16) has a carriage link slot (31) with which the second coupling element (23) of the blocking lever (21) is in engagement for transfer into the second state.

6. Assembly (11) according to Claim 4 or 5, wherein the drive carriage (16) has a component (30) which is releasably coupled to the drive carriage (16) and which has the carriage link slot (31).

7. Assembly (11) according to either of Claims 5 and 6, wherein the carriage link slot (31) is designed in such a way that, in the second state of the blocking lever (21), it controls the drive-along movement of the bearing carriage (18) by the drive carriage (16).

8. Assembly (11) according to one of Claims 1 to 7, wherein the locking element is designed as a spring element (25).

9. Assembly (11) according to one of Claims 1 to 8, wherein the drive carriage (16) is designed in such a way that, prior to the transfer of the blocking lever (21) into the second state, it interacts with the locking element for unlocking such that the blocking lever (21) can be transferred into the second state.

10. Vehicle roof (2) for a motor vehicle (1), comprising
- a roof opening (6) and
- at least one assembly (11) according to one of Claims 1 to 9, wherein the two covers (3, 4) close the roof opening (6) in a closed position.

11. Method for opening a cover (3) of a vehicle roof (2) according to Claim 10 of a vehicle (1), comprising the following steps:
- displacing a drive carriage (16) along a guide rail (5) starting from a closed position of the cover (3),
- setting out a set-out lever (17) of the cover (3) in order to raise the cover (3) in the region of a rear edge (7) by means of a set-out mechanism (12),
- interaction of the drive carriage (16) with a movable blocking lever (21) in such a way that the blocking lever (21) can be displaced from a first state, in which it holds a bearing carriage (18) in a positionally fixed position with respect to the guide rail (5), into a second state, in which the bearing carriage (18) can be displaced with respect to the guide rail (5) by means of the drive carriage (16) .

## Revendications

1. Arrangement (11) comprenant deux couvercles (3, 4) pour un toit de véhicule (2) d'un véhicule (1),
- le premier couvercle (3), pour être ouvert, pouvant être soulevé au moyen d'un mécanisme d'orientation (12) dans une zone d'un bord de couvercle arrière (7) et pouvant être coulissé dans une position ouverte dans une direction d'ouverture au-dessus du toit de véhicule (2);
- le mécanisme d'orientation (12) associé au premier couvercle (3) possédant:
-- un chariot d'entraînement (16) qui peut coulisser dans un rail de guidage (5) le long de la direction d'ouverture au moyen d'un mécanisme d'entraînement;
-- un levier d'orientation (17), lequel est accouplé au premier couvercle (3) de manière pivotante et coulissante;
-- un chariot de support (18) auquel le levier d'orientation (17) est accouplé de manière pivotante; et
-- un levier de blocage (21), qui est monté mobile sur le chariot de support (18) et par le biais duquel le chariot de support (18), dans un premier état du levier de blocage (21), est maintenu dans une position fixe par rapport au rail de guidage (5);
- l'arrangement (11) étant configuré de telle sorte qu'à partir d'une position fermée du premier couvercle (3), lors d'un coulissement du chariot d'entraînement (16), le levier d'orientation (17) est orienté vers l'extérieur au moyen du mécanisme d'orientation (12) et ensuite, en poursuivant le coulissement du chariot d'entraînement (16), il coopère avec le levier de blocage (21) de telle sorte que le levier de blocage (21) est transféré dans un deuxième état dans lequel le chariot de support (18) peut coulisser par rapport au rail de guidage (5) au moyen du chariot d'entraînement (16),
- le levier de blocage (21) possédant un élément de verrouillage (25) qui bloque le levier de blocage (21) dans le premier état,
**caractérisé en ce que**
- l'élément de verrouillage (25), pour bloquer le levier de blocage (21), vient en prise dans un palier (29) du chariot de support (18).

2. Arrangement (11) selon la revendication 1, le levier de blocage (21) étant monté pivotant sur le chariot de support (18).

3. Arrangement (11) selon l'une des revendications précédentes, possédant une coulisse (20) fixe par rapport au rail de guidage (5), laquelle coopère avec un premier élément de couplage (22) du levier de blocage (21) de telle sorte que le levier de blocage (21), dans le premier état, est maintenu en position fixe par rapport au rail de guidage (5) et qu'un coulissement du levier de blocage (21) par rapport au rail de guidage (5) est libéré dans le deuxième état.

4. Arrangement (11) selon l'une des revendications précédentes, le levier de blocage (21) possédant un deuxième élément de couplage (23) qui, dans l'état orienté vers l'extérieur du levier d'orientation (17), coopère avec le chariot d'entraînement (16) de telle sorte que le levier de blocage (21) peut être transféré du premier état dans le deuxième état.

5. Arrangement (11) selon la revendication 4, le chariot d'entraînement (16) possédant une coulisse de chariot (31) avec laquelle le deuxième élément de couplage (23) du levier de blocage (21) est en prise pour le transfert dans le deuxième état.

6. Arrangement (11) selon la revendication 4 ou 5, le chariot d'entraînement (16) possédant un élément constitutif (30) qui est accouplé de manière amovible au chariot d'entraînement (16) et qui possède la coulisse de chariot (31).

7. Arrangement (11) selon l'une des revendications 5 et 6, la coulisse de chariot (31) étant configurée de telle sorte que dans le deuxième état du levier de blocage (21), celle-ci commande un mouvement d'accompagnement du chariot de support (18) par le chariot d'entraînement (16) .

8. Arrangement (11) selon l'une des revendications 1 à 7, l'élément de verrouillage étant réalisé sous la forme d'un élément ressort (25).

9. Arrangement (11) selon l'une des revendications 1 à 8, le chariot d'entraînement (16) étant configuré de telle sorte qu'avant le transfert du levier de blocage (21) dans le deuxième état, celui-ci coopère avec l'élément de verrouillage en vue du déblocage, de sorte que le levier de blocage (21) peut être transféré dans le deuxième état.

10. Toit de véhicule (2) pour un véhicule (1), comprenant
- une ouverture de toit (6) et
- au moins un arrangement (11) selon l'une des revendications 1 à 9, les deux couvercles (3, 4) fermant l'ouverture de toit (6) dans une position fermée.

11. Procédé pour ouvrir un couvercle (3) d'un toit de véhicule (2) selon la revendication 10 d'un véhicule (1), comprenant les étapes suivantes:
- coulissement d'un chariot d'entraînement (16) le long d'un rail de guidage (5) à partir d'une position fermée du couvercle (3),
- orientation vers l'extérieur d'un levier d'orientation (17) du couvercle (3) pour soulever le couvercle (3) dans la zone d'un bord arrière (7) au moyen d'un mécanisme d'orientation (12),
- coopération du chariot d'entraînement (16) avec un levier de blocage (21) mobile de telle sorte que le levier de blocage (21) soit transféré d'un premier état, dans lequel il maintient un chariot de support (18) dans une position fixe par rapport au rail de guidage (5), dans un deuxième état, dans lequel le chariot de support (18) peut coulisser par rapport au rail de guidage (5) au moyen du chariot d'entraînement (16).
